# FASCICULE DE BREVET EUROPEEN

(11) **EP 0 549 743 B1**
(45) Date de publication et mention de la délivrance du brevet: **22.01.1997**
(21) Numéro de dépôt: 92911504.6
(22) Date de dépôt: 14.05.1992
(51) Int. Cl.: H02J 7/00, H02J 9/06

(54) **DISPOSITIF D'OPTIMISATION DE LA DECHARGE DE DEUX GENERATEURS ELECTROCHIMIQUES**
Optimierungsvorrichtung für die Entladung von zwei elektrochemischen Stromgeneratoren
DEVICE FOR OPTIMIZING THE DISCHARGE OF TWO ELECTROCHEMICAL GENERATORS

(30) Priorité: 17.05.1991 FR 9106032
(43) Date de publication de la demande: 07.07.1993
(73) Titulaire: ALCATEL ALSTHOM COMPAGNIE GENERALE D'ELECTRICITE, 75382 Paris Cédex 08 (FR)
(72) Inventeur: ANDRIEU, Xavier, F-91220 Brétigny-sur-Orge (FR)
(74) Mandataire: Laroche, Danièle
(86) Numéro de dépôt international: FR9200427
(87) Numéro de publication internationale: WO9221174

(56) Documents cités:
- EP-A- 0 299 323
- EP-A- 0 342 693
- DE-A- 2 605 730
- GB-A- 2 230 405
- US-A- 3 928 791

## Description

Le domaine de l'invention est celui des dispositifs permettant d'optimiser la décharge de générateurs électrochimiques. Plus précisément, la présente invention concerne un dispositif de décharge de générateurs électrochimiques applicable dans le cas où des courants importants sont nécessaires pour alimenter un appareil.

De façon connue, les générateurs électrochimiques sont constitués de deux électrodes immergées dans un électrolyte, qu'il s'agisse de piles (générateurs primaires) ou d'accumulateurs (générateurs secondaires). Ils sont caractérisés par une tension nominale, en volts, et par une capacité, exprimée en Ah.

De façon traditionnelle, la décharge d'un générateur électrochimique s'effectue en courant continu. La capacité d'un générateur dépend notamment du régime de décharge auquel il est soumis. La capacité du générateur décroît lorsque le régime de décharge augmente (loi de PEUKERT). Cette décroissance est due à la diffusion des ions dans l'électrolyte et/ou dans les phases solides des matériaux d'électrode en régime stationnaire.

Une conséquence d'un régime de décharge élevé est l'établissement de gradients de concentration d'espèces électroactives à l'intérieur des électrodes. Il en résulte un fonctionnement hétérogène (surcharge ou surdécharges locales) et une mauvaise utilisation des matières actives entraînant une baisse de capacité instantanée et une diminution de la durée de vie du générateur électrochimique.

Il est donc préférable de décharger un générateur électrochimique par un régime impulsionnel pour que la relaxation induite à chaque période de repos permette d'homogénéiser le fonctionnement des électrodes.

La décharge en régime impulsionnel est notamment mise en oeuvre pour des applications à fort courant. Il est ainsi possible d'alimenter des appareils à l'aide d'alimentations à découpage ou encore hacheurs. Cependant, le principal inconvénient de ce type d'alimentation est que la fréquence de hachage de la tension continue d'alimentation est trop importante (de quelques kHz à quelques centaines de kHz) pour permettre une telle homogénéisation. Il n'est pas non plus possible de trop diminuer la fréquence de hachage, du fait d'une augmentation inévitable de la taille des condensateurs ayant pour fonction de lisser la tension hachée. Ces condensateurs coopèrent habituellement avec une diode et une self (montage en π).

Une augmentation de la taille des condensateurs entraîne un coût de revient de l'alimentation plus élevé et n'est envisageable que dans certaines mesures et pour des applications sur site. Il n'est en effet pas possible d'utiliser de gros condensateurs dans des alimentations d'appareils embarqués du type outillage portable (perceuses sans fil,...), véhicule à moteur électrique, radiotéléphone ou encore matériel de secours d'urgence (défibrillateurs,...).

De façon connue, les périodes de décharge impulsionnelle optimales sont élevées et de l'ordre de quelques secondes à quelques dizaines de secondes et pour de telles fréquences, il n'existe pas de condensateur permettant d'obtenir un courant continu directement utilisable pour des applications embarquées.

Un dispositif de décharge de générateurs électrochimiques est décrit dans la demande de brevet allemand n° 26.05.730 au nom de Licentia Patent Verwaltungs GmbH. Ce dispositif, par exemple appliqué à la décharge de deux générateurs électrochimiques dans un appareil alimenté par ces générateurs, réalise une connexion alternée de chacun des générateurs électrochimiques aux bornes d'alimentation de l'appareil. Chaque générateur coopère avec une première borne d'un moyen de commutation formant interrupteur, la seconde borne de chaque moyen de commutation étant reliée à l'appareil alimenté. Les secondes bornes des moyens de commutation sont reliées entre elles. Les moyens de commutation sont commandés par des signaux de commande numériques issus d'un générateur de séquences d'impulsions. Chaque moyen de commutation est rendu passant, ce qui provoque la connexion du générateur électrochimique avec lequel il coopère à l'appareil à alimenter, lorsqu'une impulsion lui est appliquée. Les impulsions des deux séquences sont décalées temporellement, de telle sorte que les deux générateurs ne soient jamais simultanément connectés à l'appareil. Une des séquences est obtenue par inversion logique de l'autre séquence.

Cependant, la présence d'un condensateur de maintien, relié en parallèle avec l'appareil alimenté, est indispensable, vu que les impulsions des deux séquences ne sont pas strictement complémentaires, du fait de l'inversion logique réalisée et du retard apporté par cette inversion logique. Il s'en suit qu'il existe, à chaque commutation, une période de temps pendant laquelle aucun des générateurs n'est relié à l'appareil à alimenter, le condensateur de maintien remplissant la fonction de générateur pendant ces périodes temporelles. Or, si l'appareil nécessite un courant d'alimentation important, ce condensateur doit également présenter une capacité importante. Le dispositif décrit dans ce document ne convient donc pas pour des applications embarquées à fort courant de décharge.

On connaît par ailleurs, par le brevet américain n°4.297.590, un système d'alimentation employant trois générateurs électrochimiques sollicités alternativement. Un recouvrement des périodes de décharge est assuré. Chaque générateur électrochimique fournit du courant pendant une durée 2T/3 et n'est pas sollicité pendant T/3, T étant la durée d'un cycle. Ainsi, ce document propose d'effectuer une mise en parallèle des générateurs électrochimiques deux à deux, de manière à assurer une égalisation des tensions.

Par ailleurs, la demande de brevet européen n°0.342.693 décrit une alimentation secteur secourue où il est prévu qu'une commutation est réalisée entre une pile et une source d'alimentation principale, fonctionnant à partir de cette tension secteur, lorsqu'une coupure de tension secteur se produit. La pile remplit alors une fonction d'alimentation palliant à la défaillance de l'alimentation secteur. La commutation est réalisée de sorte que l'alimentation secteur et la pile soient reliées en parallèle pendant une partie de la durée de commutation, afin d'assurer une continuité d'alimentation.

Cependant, l'alimentation secteur comporte des condensateurs de maintien.

La présente invention a pour objectif de remédier à ces inconvénients.

Plus précisément, un des objectifs de l'invention est de fournir un dispositif permettant de décharger des générateurs électrochimiques en régime impulsionnel, la période de décharge étant optimisée pour obtenir une capacité maximale du générateur électrochimique, tout en ne nécessitant pas de filtre de lissage ou de condensateur de maintien.

Un autre objectif de l'invention est de fournir un tel dispositif qui soit d'un coût de revient réduit.

Ces objectifs, ainsi que d'autres qui apparaîtront par la suite, sont atteints grâce à un dispositif conforme à la revendication 1.

Le fait de générer deux séquences d'impulsions présentant un temps de recouvrement permet d'assurer une continuité d'alimentation de la charge. Il n'existe donc pas de rupture d'alimentation nécessitant la présence d'un condensateur de maintien de tension.

Préférentiellement, les générateurs électrochimiques présentent des capacités sensiblement égales et les impulsions ont la même durée. Il n'est dans ce cas pas nécessaire d'insérer de régulateur de courant entre les générateurs électrochimiques et la charge alimentée, ni de prévoir des moyens de modification du rapport cyclique des séquences d'impulsions.

Dans un mode de réalisation avantageux, les moyens de commutation sont constitués d'interrupteurs statiques et préférentiellement de transistors à effet de champ. Ceci permet de n'avoir aucune pièce en mouvement dans le dispositif de décharge des générateurs électrochimiques et d'augmenter sa durée de vie.

Avantageusement, les durées des impulsions sont fonction du type des générateurs électrochimiques.

D'autres caractéristiques de la présente invention apparaîtront à la lecture de la description suivante d'un mode de réalisation préférentiel, donné à titre illustratif et non limitatif, et des figures annexées dans lesquelles:
- la figure 1 représente un schéma équivalent d'un générateur électrochimique;
- la figure 2 représente un mode de réalisation préférentiel du dispositif selon l'invention;
- la figure 3 représente les séquences d'impulsions SC1 et SC2 de la figure 2;
- la figure 4 représente le gain en capacité de deux générateurs électrochimiques, ce gain étant obtenu en fonction des périodes des séquences d'impulsions de la figure 3.

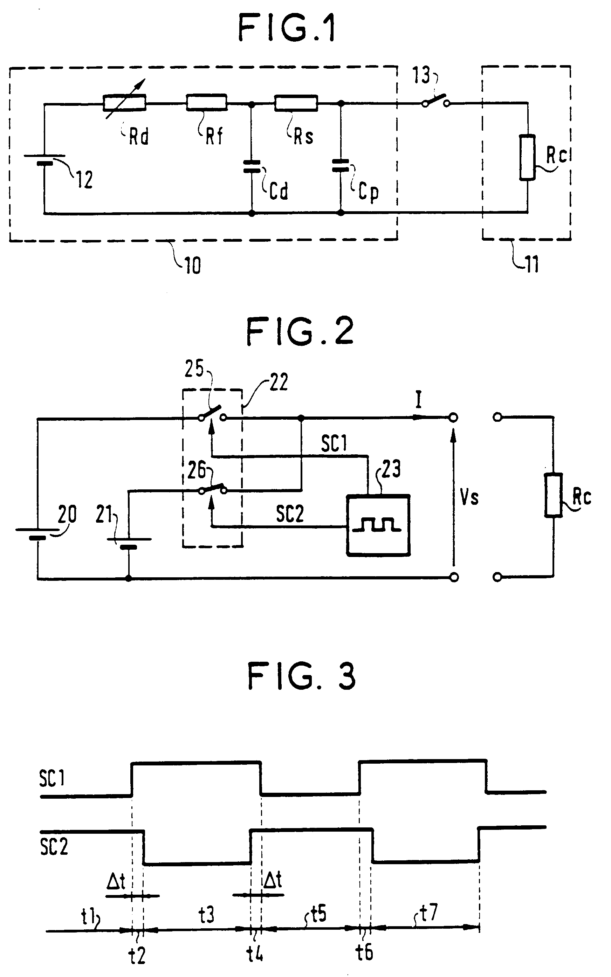

La figure 1 représente un schéma équivalent d'un générateur électrochimique.

Le schéma équivalent d'un générateur électrochimique 10 comporte une impédance de diffusion Rd, une résistance Rf de transfert de charge, une résistance série Rs, une capacité physique Cp et une capacité de couche double Cd. Le générateur électrochimique 10 est raccordé à une charge 11 par l'intermédiaire d'un interrupteur 13. La charge 11 est par exemple constituée par une résistance Rc.

La capacité physique Cp est directement liée à la constante diélectrique de l'électrolyte et à la géométrie des électrodes utilisées. La valeur de Cp par cm² de surface apparente d'électrode est généralement comprise entre 10 pF et 1 nF.

La capacité Cd de couche double correspond à l'accumulation des ions à la surface des électrodes. La valeur de Cd par cm² d'électrode est généralement comprise entre 100 nF et 10 µF.

La résistance série Rs représente la conductivité ionique de l'électrolyte et la conductivité électronique des matières actives.

La résistance Rf de transfert de charge dépend de la cinétique électrochimique aux électrodes, c'est-à-dire de la vitesse de réaction entre les électrodes et l'électrolyte. Plus la vitesse de réaction est importante, plus la résistance Rf est faible.

L'impédance de diffusion Rd, aussi appelée impédance de Warburg, est une impédance dont la valeur varie en fonction de la fréquence de sollicitation de l'interrupteur 13. En basses fréquences, l'impédance Rd introduit un déphasage constant de 45° entre le courant consommé par la charge 11 et la tension aux bornes de cette charge. Cela s'explique par un régime diffusionnel non stabilisé, le profil de concentration ionique étant en retard par rapport à la contrainte électrique. On obtient alors un déphasage négatif de type capacitif. L'impédance de diffusion Rd peut donc également être représentée par une capacité (elle est généralement représentée par la lettre W).

Comme l'établissement du profil de concentration et sa relaxation sont essentiellement dissipatifs, il est possible de représenter l'impédance de diffusion Rd par une résistance variable en fonction de la fréquence, de l'intensité du courant délivré et de l'état du générateur.

Le déphasage de type capacitif peut apparaître dans une électrode poreuse volumique et/ou dans une électrode solide de faible conductivité ionique interne (par rapport à la conductivité ionique de l'électrolyte externe). Ce même comportement peut également apparaître dans une structure poreuse capacitive sans diffusion (réseau résistif/capacitif de type passe-bas d'ordre quasiment infini).

L'optimisation du rendement électrique d'un générateur électrochimique consiste donc à diminuer au maximum la résistance interne du générateur constituée par la somme de Rs, Rf et Rd.

Par souci de simplification, on peut considérer Rs et Rf comme étant constants. La limitation des pertes à fort régime consiste donc à minimiser Rd et le déphasage.

Le régime de décharge en continu est le plus défavorable car Rd est maximum. En courant alternatif, une diminution de Rd est possible, mais la fréquence de sollicitation de l'interrupteur 13 ne doit pas être trop élevée. En effet, Rs et Cd constituent un filtre passe-bas (Cp est négligeable devant Cd) et le générateur ne serait soumis qu'à un courant continu si la fréquence de sollicitation était trop élevée.

La figure 2 représente un mode de réalisation préférentiel du dispositif selon l'invention.

Ce mode de réalisation consiste à connecter deux générateurs électrochimiques 20, 21 à un ensemble de commutation 22 et à commander cet ensemble 22 de telle sorte qu'un générateur électrochimique fournit un courant pendant que l'autre générateur est au repos. L'application représentée consiste à décharger alternativement les générateurs 20 et 21 par une résistance Rc.

La commande des moyens de commutation 22 est assurée par un générateur 23 de séquences d'impulsions SC1 et SC2.

L'ensemble de commutation 22 est par exemple constitués d'interrupteurs statiques 25 et 26 constituant des moyens de commutation. Les pôles négatifs des générateurs 20 et 21 sont reliés entre eux et chacun des pôles positifs des générateurs 20 et 21 est connecté à un interrupteur 25, 26.

Le générateur 23 de séquences d'impulsions commande les interrupteurs 25 et 26 de telle sorte que lorsque l'interrupteur 25 est fermé, l'interrupteur 26 est ouvert, et réciproquement. De plus, comme représenté à la figure 3, chaque impulsion d'une séquence d'impulsions SC1 et SC2 présente, au niveau de chaque changement d'état, un temps de recouvrement avec une impulsion de l'autre séquence d'impulsions, de telle sorte que la charge Rc est constamment alimentée par au moins un des générateurs électrochimiques.

Les périodes de temps t1 à t7 représentées délimitent des périodes de temps des séquences SC1 et SC2. Lorsqu'une de ces séquences présente un niveau haut, le moyen de commutation qu'elle pilote connecte le générateur électrochimique associé à la charge Rc. Ainsi, le générateur électrochimique 20 est relié à la charge Rc à travers le moyen de commutation 25 pendant les temps t3 et t7 et déconnecté de cette charge pendant les temps t1 et t5. Réciproquement, le générateur électrochimique 21 est relié à la charge Rc à travers le moyen de commutation 26 pendant les temps t1 et t5 et déconnecté de cette charge pendant les temps t3 et t7. De plus, les séquences SC1 et SC2 présentent des temps de recouvrement t2, t4 et t6 pendant lesquels les générateurs 20 et 21 sont tous deux connectés à la charge Rc. Ces temps de recouvrement ont une durée Δt brève, destinée à assurer une continuité d'alimentation de la charge Rc. Chaque moyen de commutation réalise donc la connexion du générateur électrochimique avec lequel il coopère à la charge Rc pendant un temps tx+2Δt. Les durées Δt sont très brèves, la fonction du recouvrement étant limitée à assurer la jonction entre les connexions des générateurs électrochimiques 20 et 21 à la charge Rc, de façon à éviter des micro-coupures d'alimentation, et donc l'emploi d'un condensateur de maintien, de taille importante en application fort courant. Un déroulement continu des séquences SC1 et SC2 permet donc d'assurer à la fois une alimentation ininterrompue de la charge Rc et une relaxation cyclique de chaque générateur électrochimique.

Le courant I absorbé par la charge Rc est constant si les générateurs électrochimiques 20 et 21 ont les mêmes capacités. Chaque générateur électrochimique 20, 21 fournit alternativement le courant I à la charge Rc et chacun est débité d'un courant sensiblement égal à I/2 pendant les temps Δt. Un courant I constant permet d'alimenter directement une charge Rc pouvant être constituée par un dispositif du type radiotéléphone, moteur d'un outil portable (perceuse, visseuse, ...), appareil médical (défibrillateur, ...) ou tout autre appareil nécessitant l'emploi d'une alimentation embarquée (véhicule électrique).

Si les générateurs électrochimiques 20, 21 ne sont pas du même type (lithium, plomb,...) ou si leurs capacités sont différentes, le courant I peut présenter une certaine fluctuation. Dans certaines applications (alimentation de moteurs notamment), une légère fluctuation du courant d'alimentation n'a pas de conséquences sur le bon fonctionnement de l'appareil alimenté. Cependant, si l'alimentation s'applique à un appareil plus sensible à des variations de courant d'alimentation, il est nécessaire d'insérer un régulateur de courant entre cet appareil et le dispositif de décharge de l'invention. Un autre palliatif à une différence sensible de capacité des générateurs électrochimiques est de modifier le rapport cyclique du signal de commande des interrupteurs 25, 26. Il est ainsi possible de compenser cette différence de capacité.

Selon un mode de réalisation préférentiel de l'invention, les interrupteurs 25 et 26 sont des interrupteurs statiques. Ils peuvent par exemple être constitués de transistors à effet de champ de type MOSFET de puissance. Ce composant présente l'avantage d'avoir une résistance très faible entre le drain et la source lorsqu'il est conducteur.

Le générateur 23 de séquences d'impulsions peut être constitué par un circuit intégré alimenté par la tension Vs disponible aux bornes de la charge Rc.

Les générateurs électrochimiques 20 et 21 peuvent être indifféremment des accumulateurs ou des piles. Il est cependant préférable de choisir des éléments de même type et de même capacité pour éviter l'ajout d'un régulateur de courant. Si les types et capacités des générateurs électrochimiques sont les mêmes, les durées des impulsions des séquences SC1 et SC2 sont identiques.

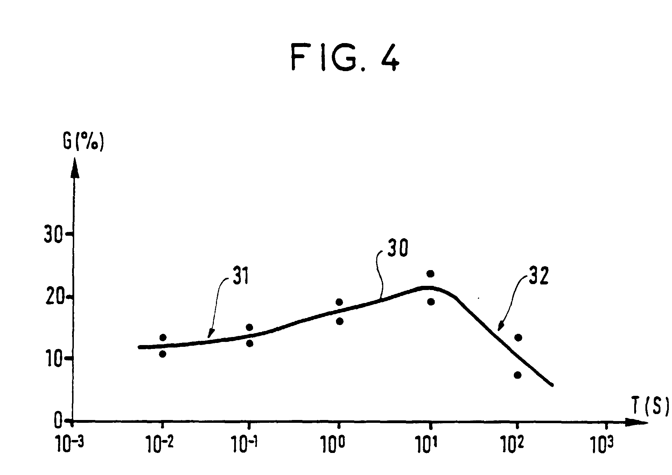

Le facteur assurant un bon rendement du dispositif de l'invention est la période de sollicitation des interrupteurs 25 et 26, comme représenté en figure 4.

La figure 4 représente le gain en capacité de deux générateurs électrochimiques obtenu en fonction de la période des séquences d'impulsions de la figure 3.

La courbe 30 montre le gain G en % de capacité obtenu par le montage de la figure 2 pour 5 jeux de générateurs électrochimiques semblables, en fonction de la période de sollicitation des interrupteurs 25 et 26. Les générateurs électrochimiques utilisés sont des piles alcalines Zn/MnO2 de format R6 et proviennent du même lot de fabrication. Quatre autres de ces piles permettent de mesurer leur capacité moyenne en courant continu, avec un courant de décharge de 100 mA. La capacité moyenne obtenue est de 2,05 Ah par élément. Cette valeur correspond à la valeur 0 de l'axe des ordonnées.

Chaque jeu de deux piles est alors utilisé dans le montage de la figure 2, pour une période de sollicitation des interrupteurs 25 et 26 donnée et pour un courant périodique de 200 mA. Les signaux de commande des interrupteurs ont un rapport cyclique proche de 1 et le courant moyen débité par chaque pile est donc également de 100 mA. Les capacités sont mesurées et rapportées sur la figure 4.

On constate une très nette augmentation de la capacité des générateurs électrochimiques. Pour une période de sollicitation de chaque interrupteur de 5 secondes, c'est-à-dire pour une période totale de 10 secondes, on observe une augmentation de plus de 20 % de la capacité (2,5 Ah au lieu de 2,05 Ah en courant continu).

La période de sollicitation optimale dépend du type de générateur électrochimique utilisé. La courbe 30 présente une diminution du gain en capacité autour de son maximum (T=10s.).

La décroissance 32 est due au filtre passe-bas constitué par Rs et Cd (figure 1).

Lorsque la fréquence devient trop importante (décroissance 31), le filtre constitué par Rs et Cd lisse le signal et le générateur de tension 12 (figure 1) n'est plus soumis qu'à une décharge continue et le gain en capacité chute rapidement.

La période des séquences de commande est ici préférentiellement comprise entre 5 et 50 secondes et vaut avantageusement 10. secondes.

Le rendement instantané et le rendement global (durée de vie du générateur) sont améliorés. La relaxation induite à chaque période permet d'homogénéiser le fonctionnement des électrodes volumiques. Si les capacités des générateurs électrochimiques ne sont pas sensiblement égales, la compensation de la différence de capacité est effectuée en modifiant la fréquence de sollicitation des interrupteurs et/ou le rapport cyclique du signal de commande des interrupteurs.

Bien entendu, le dispositif de l'invention est uniquement applicable pour des courants importants et pour les générateurs dont le comportement est sensible à la densité de courant. Il s'applique avantageusement aux générateurs électrochimiques dont la capacité chute de façon importante avec le régime de décharge. Par exemple, l'invention permet d'obtenir des gains en capacité plus importants pour des générateurs électrochimiques au plomb que pour des générateurs aux cadmium-nickel.

Comme Rd dépend des profils de concentration, le générateur électrochimique doit comprendre au moins une électrode volumique. Le dispositif de l'invention s'applique également aux électrodes sous forme de plaques (2 dimensions), mais le gain en capacité est alors moins important.

Le dispositif de l'invention permet donc un gain important en capacité et, pour une capacité finale égale, l'utilisation de générateurs électrochimiques de taille plus réduite. On obtient un gain en encombrement et en poids de 20 % pour une capacité égale.

L'invention présente donc également une solution à l'encombrement et au poids des générateurs électrochimiques actuellement utilisés dans les appareils portatifs ou alors dans les véhicules électriques.

La présente invention s'applique également à des charges de type capacitif ou inductif et permet une augmentation de la durée de vie des générateurs électrochimiques.

## Revendications

1. Dispositif de décharge de deux générateurs électrochimiques (20,21) dans une charge (Rc), ledit dispositif comprenant deux moyens de commutation (25,26) coopérant chacun avec un des deux générateurs électrochimiques (20,21), lesdits moyens de commutation (25,26) étant séquentiellement commandés par un générateur (23) de deux séquences d'impulsions (SC1,SC2) qui sont décalées les unes par rapport aux autres, chacun des deux générateurs électrochimiques (20,21) étant relié à ladite charge (Rc) pendant la durée d'une impulsion à travers le moyen de commutation (25,26) avec lequel il coopère, caractérisé en ce que les impulsions de chaque séquence (SC1,SC2) présentent un temps de recouvrement (Δt) avec les impulsions de l'autre séquence (SC1, SC2), de telle sorte que ladite charge (Rc) est constamment alimentée par un seul des deux générateurs électrochimiques (20, 21) hors desdits temps de recouvrement, ledit temps de recouvrement (Δt) étant très inférieur à la durée (t1,t3,t5,t7) de chacune desdites impulsions.

2. Dispositif selon la revendication 1, caractérisé en ce que les deux générateurs électrochimiques (20,21) présentent des capacités sensiblement égales et en ce que lesdites impulsions ont la même durée (t1,t3,t5,t7).

3. Dispositif selon l'une des revendications 1 et 2, caractérisé en ce que lesdits moyens (25,26) de commutation sont constitués d'interrupteurs statiques.

4. Dispositif selon l'une des revendications 1 à 3, caractérisé en ce que lesdits moyens (25,26) de commutation sont constitués de transistors à effet de champ.

5. Dispositif selon l'une des revendications 1 à 4, caractérisé en ce que les durées (t1,t3,t5,t7) desdites impulsions sont fonction du type desdits générateurs électrochimiques (20,21).

## Patentansprüche

1. Vorrichtung zur Entladung von zwei elektrochemischen Generatoren (20, 21) in eine Last (Rc) mit zwei Schaltmitteln (25, 26), die je mit einem der elektrochemischen Generatoren (20, 21) zusammenwirken und die sequentiell von einem Generator (23) mit zwei gegeneinander verschobenen Impulsfolgen (SC1, SC2) gesteuert werden, wobei jeder der beiden elektrochemischen Generatoren (20, 21) mit der Last (Rc) während der Dauer eines Impulses über das ihm zugeordnete Schaltmittel (25, 26) verbunden ist, dadurch gekennzeichnet, daß die Impulse der beiden Folgen (SC1, SC2) eine Überlappungszeit (Δt) mit den Impulsen der anderen Folge (SC1, SC2) besitzen, so daß die Last (Rc) außerhalb der Überlappungszeiträume dauernd von einem der beiden elektrochemischen Generatoren (20, 21) gespeist wird, wobei der Überlappungszeitraum (Δt) deutlich kleiner als die Dauer (t1, t3, t5, t7) jedes der Impulse ist.

2. Vorrichtung nach Anspruch 1, dadurch gekennzeichnet, daß die beiden elektrochemischen Generatoren (20, 21) im wesentlichen gleiche Kapazitäten besitzen und daß die Impulse die gleiche Dauer (t1, t3, t5, t7) aufweisen.

3. Vorrichtung nach einem der Ansprüche 1 und 2, dadurch gekennzeichnet, daß die Schaltmittel (25, 26) von statischen Unterbrechern gebildet werden.

4. Vorrichtung nach einem der Ansprüche 1 bis 3, dadurch gekennzeichnet, daß die Schaltmittel (25, 26) Feldeffekttransistoren sind.

5. Vorrichtung nach einem der Ansprüche 1 bis 4, dadurch gekennzeichnet, daß die Dauer (t1, t3, t5, t7) der Impulse von der Art der verwendeten elektrochemischen Generatoren (20, 21) abhängt.

## Claims

1. A device for discharging two electrochemical cells (20, 21) into a load (Rc), said device comprising two switching means (25, 26) each cooperating with one of said electrochemical cells (20, 21), said switching means (25, 26) being controlled sequentially by a generator (23) providing two pulse trains (SC1, SC2) which are offset relative to one another, each of the two electrochemical cells (20, 21) being connected to said load (Rc) for the duration of a pulse, through the switching means (25, 25) with which the cell cooperates, the device being characterized in that the pulses of each train (SC1, SC2) have an interval of overlap (Δt) with the pulses of the other train (SC1, SC2), such that said load (Rc) is constantly supplied by one only of the two electrochemical cells (20, 21) outside said overlap interval, said overlap interval (Δt) being very much smaller than the duration (t1, t3, t5, t7) of each of said pulses.

2. A device according to claim 1, characterized in that the two electrochemical cells (20, 21) have substantially equal capacities and in that said pulses have the same durations (t1, t3, t5, t7).

3. A device according to claim 1 or 2, characterized in that said switching means (25, 26) are solid state switches.

4. A device according to any one of claims 1 to 3, characterized in that said switching means (25, 26) are field effect transistors.

5. A device according to any one of claims 1 to 4, characterized in that the durations (t1, t3, t5, t7) of said pulses are a function of the type of said electrochemical cells (20, 21).
